(19)

**Europäisches Patentamt**
**European Patent Office**
**Office européen des brevets**

(11)  **EP 2 956 343 B1**

(12)  # EUROPEAN PATENT SPECIFICATION

(45) Date of publication and mention
of the grant of the patent:
**19.12.2018 Bulletin 2018/51**

(21) Application number: **14751664.5**

(22) Date of filing: **31.01.2014**

(51) Int Cl.:
*B60W 10/00* (2006.01)  *B60W 10/10* (2012.01)
*B60W 30/14* (2006.01)  *B60W 40/10* (2012.01)
*B60W 40/13* (2012.01)  *G01G 19/03* (2006.01)
*F16H 59/00* (2006.01)

(86) International application number:
**PCT/SE2014/050125**

(87) International publication number:
**WO 2014/126523 (21.08.2014 Gazette 2014/34)**

(54)  **SIMULTANEOUS ESTIMATION OF AT LEAST MASS AND ROLLING RESISTANCE**

GLEICHZEITIGE SCHÄTZUNG MINDESTENS EINER MASSE UND EINES ROLLWIDERSTANDES

ESTIMATION SIMULTANÉE D'AU MOINS UNE MASSE ET UNE RÉSISTANCE AU ROULEMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.02.2013 SE 1350172**

(43) Date of publication of application:
**23.12.2015 Bulletin 2015/52**

(73) Proprietor: **Scania CV AB**
**151 87 Södertälje (SE)**

(72) Inventor: **HANSSON, Jörgen**
**S-129 42 Hägersten (SE)**

(56) References cited:
**DE-A1- 10 235 969**  **DE-A1-102009 026 687**
**DE-B3-102011 013 022**  **SE-C2- 536 326**
**US-A1- 2007 162 210**  **US-A1- 2012 016 623**
**US-A1- 2012 083 985**  **US-B1- 6 314 383**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Technical field

The present invention pertains to a method for the estimation of parameters which impact a driving resistance for a vehicle according to the preamble of patent claim 1, and a system for the estimation of parameters which impact a driving resistance for a vehicle according to the preamble of patent claim 14.

The invention also pertains to a computer program and a computer program product, which implement the method according to the invention.

### Background

The following background description constitutes a description of the background to the present invention, which does not have to constitute prior art.

Control systems comprising one or more regulators are currently used to control a large number of different types of systems in a vehicle, e.g. systems for gear selection and cruise control. The control is based on a number of parameters necessary for enabling the control systems to carry out calculations and/or to make appropriate decisions.

DE10235969 A1, according to the respective preambles of claims 1 and 14, discloses a method for controlling a motor vehicle gearbox, whereby the rolling resistance is determined from the current torque excess (dM) and the resultant vehicle acceleration (a), dependent on the road inclination, which is determined using a slope sensor. The current vehicle mass is determined by comparison of the current measured torque excess with a torque excess determined using a vehicle mass stored in an electronic control unit.

DE102011013022 B3 discloses a method for determining the driving resistance (FW) of a vehicle, taking into account a value for the vehicle mass (m), a calculation of the running resistance (FW). Before commencing the journey in an estimating method in consideration of sensor signals, the vehicle mass (m) and driving resistance coefficients (F0, F1, F2) estimated from which an initial value of the running resistance (FW) is calculated, wherein, during the drive then based one of successively measured time drive measured values corrected value for the travel resistance (FW) and the vehicle mass (m) is calculated.

US2012/016623 A1 discloses a microcontroller-based method and apparatus are described for measuring motions signals (301) with a plurality of inertial sensors (302-304) contained within a device package housing and validating (420) a first measured motion signal (e.g., $\Omega_X$) by generating at least a first estimated value $\Omega_X$ for the first motion signal (e.g., 419) based on at least a second measured motion signal (e.g., $A_Y$) and for comparing the first estimated value for the first motion signal (419) to the first measured motion signal $\Omega_X$ in order to validate the first measured motion signal $\Omega_X$.

A mass m of a vehicle, where the vehicle may consist of a vehicle platoon, constitutes an important parameter in many functions of a vehicle's control system. The mass m of the vehicle impacts the vehicle considerably in many situations, which is why it is very important to be able to estimate this mass m accurately. The vehicle's mass m is typically included in dynamic models of the vehicle, describing e.g. the forces acting on the vehicle. Such models may be used for a number of different calculations and controls in the vehicle, e.g. to control a brake system in the vehicle.

For a vehicle that may transport large loads, such as buses, which may transport a large number of people, or trucks, which may transport different types of cargo with heavy weights, the mass may vary considerably. For example, an unloaded truck weighs considerably less than the same truck when it is loaded to its maximum capacity. An empty bus also has a considerably smaller mass than the same bus when it is full of passengers. For e.g. a passenger car, the variations in mass are smaller than for vehicles designed to transport large loads, but even here the difference between an empty and a fully loaded passenger car, where the fully loaded passenger car may also comprise a connected and loaded trailer, may be relatively large in relation to the low mass of the passenger car.

A rolling resistance force $F_{roll}$ which the vehicle experiences is also an important parameter for the control systems in the vehicle. The road gradient $\alpha$ for a road section where the vehicle is located, and/or for a road section in front of the vehicle, and an air resistance parameter $C_{air}$, which is related to the air resistance force $F_{air}$ for the vehicle may constitute important parameters for the control systems in several applications.

The vehicle mass $m$, the rolling resistance force $F_{roll}$, the air resistance parameter $C_{air}$ and the road gradient $\alpha$ impact a driving resistance force $F_{drivingres}$ for the vehicle, meaning that one or several of the vehicle's mass $m$, the rolling resistance force $F_{roll}$, the air resistance parameter $C_{air}$ and the road gradient $\alpha$ are important parameters e.g. for automatic gear selection. Automatic gear selection is for example carried out in an automated manual gearbox, where it is important to be able to determine the current driving resistance $F_{drivingres}$ and thus which gear should be selected at a given time.

The manner in which the topography of a road section impacts the vehicle is also heavily dependent on the road gradient $\alpha$ and the vehicle's mass $m$, since the mass $m$ and the road gradient $\alpha$ are decisive for how much the vehicle is accelerated and retarded by a downhill and an uphill slope, respectively. Both the vehicle's mass $m$ and a road gradient $\alpha$ of a road section are thus also important parameters in cruise controls taking into consideration the topography of a road section, so-called Look-Ahead cruise controls, where the size of a requested engine torque at any given time is dependent on how the topography of the road section ahead will impact the vehicle's speed.

Correct and robust calculations of the vehicle's driving resistance force $F_{drivingres}$ are also important to several vehicle systems, such as for example automatic gear selection, which needs to know how heavily the vehicle may be driven in order to select the correct gear, or so-called economic cruise control, which tries to optimise the vehicle speed in the event of reverse driving with the help of map data and GPS (Global Positioning System),, where the correctly estimated vehicle parameters are required in order to carry out simulations of the vehicle's future speed. Thus, the driving resistance force $F_{drivingres}$, which describes the sum of the external forces that must be overcome in order to accelerate the vehicle or maintain a constant speed, recurrently appears in e.g. these applications for gear selection and cruise control. Thus, correct estimations of the driving resistance force $F_{drivingres}$ are absolutely necessary to ensure correct function for those systems in which the vehicle uses the driving resistance force $F_{drivingres}$ in its calculations.

The driving resistance $F_{drivingres}$ is the sum of rolling, air and gradient resistance forces, and may for valid driving conditions be expressed as:

$$F_{drivingres} = F_{air} + m \cdot g \cdot \sin\alpha + m \cdot g \cdot C_r, \qquad \text{(equation 1)}$$

or as:

$$F_{drivingres} = F_{trac} - m \cdot a. \qquad \text{(equation 2)}$$

where

- $a$ is a vehicle acceleration;
- $m$ is the total vehicle mass;
- $g$ is the gravitational constant;
- $Cr$ is a rolling resistance coefficient;
- $F_{air} = C_{air} \cdot v^2$ is the air resistance force, where $C_{air}$ is the air resistance parameter;
- $\alpha$ is a current road gradient; and
- $Ftrac$ is a traction force.

Regardless of how the driving resistance $F_{drivingres}$ is determined, with equation 1 or 2, knowledge about the vehicle mass $m$ is thus required, which, as a rule, may not be measured on the vehicle and therefore requires some form of estimation. If equation 1 is used in this determination, knowledge is further required of a number of parameters other than the vehicle mass $m$, such as the rolling resistance force $F_{roll}$, which then has to be estimated.

**Brief description of the invention**

There are today several methods that may be applied in order to estimate the vehicle mass $m$. One such method uses information from an air suspension system in the vehicle. The air suspension system measures the shaft load on all the shafts with air suspension, and reports the load representing this shaft pressure to a control device, which, based on this load, may calculate the mass of the vehicle. This method functions well if all the shafts have air suspension. However, the method functions unsatisfactorily, or not at all, if one or several shafts lack air suspension. This method may be particularly problematic for vehicle platoons comprising trailers not reporting a shaft load. This may occur relatively often, as more or less unknown trailers are often connected to the vehicle platoon when the vehicle is used. This method is also problematic during the operation of the vehicle, since the shaft load varies when the vehicle drives over uneven sections in the road, which may lead to the mass estimation becoming inaccurate due to the changing shaft load.

Other prior art methods for mass estimation consist of acceleration-based mass estimations. These use the fact that the mass may be calculated based on a force which the engine adds to the vehicle and an acceleration resulting from this force. The force from the engine is known in the vehicle, but for these methods acceleration must be measured or estimated.

According to one method, the acceleration is estimated by carrying out a derivation of the vehicle's speed. This method functions well at high accelerations, i.e. on low gears at relatively low speeds, but a disadvantage of the method is that it is impacted by the road gradient, since the road gradient is an unknown parameter for the method.

According to another method, acceleration is estimated with the use of an accelerometer. The accelerometer based method has an advantage in that the acceleration is measured directly. However, only a limited proportion of vehicles comprise an accelerometer today, which means that this method is not generally applicable to all vehicles. According to another method, the acceleration is estimated during shifting. This method uses the assumption that the driving resistance remains unchanged during shifting and therefore compares the vehicle's acceleration before, during and after shifting to determine the vehicle's mass. This method results in very unsatisfactory estimations of the vehicle mass.

The acceleration-based mass estimations generally have disadvantages in that some driving conditions must be met, in order for a good estimation to be carried out. It is not at all certain that these conditions are met when the vehicle is driven, and in this case a good mass estimation is not possible. For example, the acceleration-based mass estimations require a sufficiently powerful acceleration in order to provide a reliable result. If such a sufficiently powerful acceleration does not occur when the vehicle is driven, such as where the vehicle starts driving on a downhill slope, e.g. at a filling station at a slip road to a motorway, where it may accelerate relatively slowly and subsequently maintain a substantially constant speed during the rest of the journey with the help of the downhill slope , these methods often do not provide a good estimation of the vehicle mass. Also in the event that the vehicle is so heavy that the engine is not capable of providing a sufficiently powerful acceleration, these methods often provide a substandard estimation of the vehicle mass.

Prior art mass estimations also often require that assumptions about rolling resistance be made, e.g. that the rolling resistance has a constant value determined in advance or that it may be disregarded. This deteriorates the accuracy of the mass estimations, since such assumptions are not always correct.

The rolling resistance force $F_{roll}$, or the rolling friction as it is also called, depends among others on the material of the tyres and the type of driving surface. A gravel road, for example, produces a larger rolling resistance than asphalt. The rolling resistance force $F_{roll}$ may, according to prior art solutions, be determined by assuming that, in a dynamic vehicle model, everything is known except the rolling resistance force $F_{roll}$, and then allowing the rolling resistance force $F_{roll}$ to consist of the remaining forces in the model. The rolling resistance force $F_{roll}$ may also be calculated based on data at two operating points, if the vehicle mass $m$, the acceleration $\alpha$, and the road gradient $\alpha$ are known at these two different points in time.

The road gradient $\alpha$ may be obtained based on a map jointly with GPS information (Global Positioning System), on radar information, on camera information, on information from another vehicle, on positioning information and on road gradient information stored earlier in the vehicle, or on information obtained from a traffic system related to said road section. The road gradient $\alpha$ may also be determined in the vehicle by using an accelerometer, a power equation and/or an elevation change. In systems where information exchange between vehicles is used, the road gradient $\alpha$ estimated by one vehicle may also be provided to other vehicles, either directly or via an intermediate unit such as a database or similar.

The air resistance force $F_{air}$, in a similar manner as for the rolling resistance force $F_{roll}$ above, may be calculated based on data at two operating points, if the vehicle mass $m$, the acceleration $\alpha$, and the road gradient $\alpha$ are known at these two different points in time. Prior art manners of determining the air resistance force $F_{air}$ have often assumed that the air resistance force $F_{air}$ consists of a constant air resistance parameter $C_{air}$, multiplied by the vehicle speed squared, $F_{air}=C_{air} \cdot v^2$. This assumption, which is thus based on a constant air resistance parameter $C_{air}$, may result in inaccurate values for the air resistance force $F_{air}$ if e.g. an air resistance coefficient, which impacts the air resistance parameter $C_{air}$, actually varies in size, so that the air resistance parameter $C_{air}$ is not at all constant.

In summary, prior estimations, which are carried out to determine the driving resistance $F_{drivingres}$, i.e. estimations of the vehicle mass $m$, the rolling resistance $F_{roll}$, the air resistance $F_{air}$ and the road gradient, are associated with driving condition problems and/or distribution problems.

In several estimation methods, the value to be estimated is calculated directly, which often requires that the vehicle is in an approved driving condition, preferably in a static operational point with a small variation in measurement signals. This means, that if these driving conditions do not arise, then no new estimations are obtained. If no approved driving conditions arise, e.g. following reloading, it may take a long time before the calculations of the vehicle mass $m$, and thus of the driving resistance $F_{drivingres}$, become accurate again.

Several methods sample data for a while when approved driving conditions arise. Subsequently, a calculation based on these sampled data is carried out, following which the estimated value is sent out and the previous sampled data are discarded and the method starts over again. The estimation thus does not improve over time, but depends on the quality of the instantaneous data which are used specifically for this estimation. Thus a distribution problem arises, which must be resolved subsequently, e.g. by forming an average value of the estimations which are sent out.

One objective of the present invention is to address said problem(s).

This objective is achieved through the above-mentioned method in accordance with the characterising portion of patent claim 1. This objective is achieved also through the above-mentioned system in accordance with the characterising portion of patent claim 21. The objective is also achieved through the above-mentioned computer program and computer program product.

According to the present invention, a longitudinal vehicle model is defined so that it comprises representations of forces with horizontal impact on the vehicle in a valid driving condition. Subsequently, an estimated vehicle mass $m^{est}$ and a representation of an estimated rolling resistance force $F_{roll}^{est}$ for the vehicle are determined. In the determination of the vehicle mass $m^{est}$ and the representation of the rolling resistance force $F_{roll}^{est}$, a model error for the longitudinal vehicle model is used, so that the longitudinal vehicle model is used jointly with known values for the representations of the forces in the model, to minimise the model error. The model error constitutes the error which is obtained for the longitudinal vehicle model, when representations of known forces and the parameters to be estimated are introduced into the vehicle model.

The concept of known values for the representations of the forces comprises, here and in this application, calculated values for the forces, having been calculated based on measured parameters and/or assumptions about parameters related to the representations of the forces. Thus, according to the invention, the longitudinal vehicle model is used together with calculations of known values for the representations of the forces, based on measured and/or assumed parameters related to the representations of the forces in the model, in order to minimise the model error in the longitudinal vehicle model, when the parameters which are to be estimated and the known values for the representations of the forces are introduced into the model.

Where the vehicle is newly manufactured, or if e.g. the control device which calculates the vehicle mass $m^{est}$ and the rolling resistance force $F_{roll}^{est}$ is replaced, there are no known values based on which estimations of e.g. the mass $m^{est}$ and the representation of the rolling resistance force $F_{roll}^{est}$ may be made. If known values are entirely missing, predetermined standard values are used for e.g. the mass $m^{est}$ and the representation of the rolling resistance force $F_{roll}^{est}$, in the situation where, for the very first time, more exact values are estimated for these.. After values of e.g. the mass $m^{est}$ and the representation of the rolling resistance force $F_{roll}^{est}$ have been estimated for the very first time, the values which were obtained at the previous estimation are used. Thus, successively more and more exact values are obtained of e.g. the mass $m^{est}$ and the representation of the rolling resistance force $F_{roll}^{est}$.

The present invention provides a simultaneous and high quality estimate of the mass $m^{est}$ and of the representation of the rolling resistance force $F_{roll}^{est}$, resulting in improved performance compared to prior art mass estimates, which often require that assumptions about rolling resistance are made, for example that the rolling resistance has a predetermined constant value or may be ignored.

According to one embodiment of the present invention, a longitudinal vehicle mode is defined so that it fits into a recursive least-square method. The recursive method is used here to estimate the mass $m^{est}$ and the representation of the rolling resistance force $F_{roll}^{est}$, which minimises the error in this vehicle model. By using a recursive least-square method, the performance of the estimation has vastly improved.

The least-square algorithm produces a better estimate the more time has lapsed and the more measuring data have been provided. Tests have shown that the algorithm very often very closely approximates the actual mass of the vehicle.

The estimated mass $m^{est}$ and the representation of the rolling resistance force $F_{roll}^{est}$ are used, among others, for driving resistance calculations in automatic gear selections. The estimated mass $m^{est}$ is also used for calculations in different types of cruise control. Thus the present invention results in more optimised gear selections and cruise control in the vehicle.

In addition to estimating the mass $m^{est}$ *and* the representation of the rolling resistance force $F_{roll}^{est}$, additional parameters may be estimated with the use of the present invention.

According to one embodiment, in addition to the mass $m^{est}$ and the representation of the rolling resistance force $F_{roll}^{est}$, the air resistance parameter $C_{air}^{est}$ is estimated through a simultaneous estimation of the vehicle mass $m^{est}$, the representation of the rolling resistance force $F_{roll}^{est}$ and the air resistance parameter $C_{air}^{est}$. The representation of the air resistance force $F_{air}$ depends on the vehicle's speed squared, $F_{air} = C_{air} \cdot v^2$, where $C_{air}$ is the air resistance parameter, which means that changes in the vehicle's speed also produce large changes in the representation of the air resistance force $F_{air}$. The air resistance parameter $C_{air}$ is dependent mainly on the vehicle's front area and on the vehicle's air resistance coefficient. The air resistance coefficient may be changed, e.g. if new equipment is mounted or dismounted on the vehicle, such as light-bars or other equipment, such as trimmings. The front area may be altered, e.g. if a trailer is connected to or disconnected from the vehicle and for instance protrudes outside the driver's cabin..

According to one embodiment, in addition to the mass $m^{est}$ and the representation of the rolling resistance force $F_{roll}^{est}$, a road gradient $\alpha^{est}$ is also estimated through a simultaneous estimation of the vehicle mass $m^{est}$, the representation of the rolling resistance force $F_{roll}^{est}$ and the road gradient $\alpha^{est}$.

According to one embodiment, in addition to the mass $m^{est}$ and the representation of the rolling resistance force $F_{roll}^{est}$, the air resistance parameter $C_{air}^{est}$ and the road gradient $\alpha^{est}$ are estimated through a simultaneous estimation of the vehicle mass $m^{est}$, the representation of the rolling resistance force $F_{roll}^{est}$, the air resistance parameter $C_{air}^{est}$ and the road gradient $\alpha^{est}$.

The present invention uses, and increases its accuracy regarding estimations, if the traction force varies in size when the measurements are carried out. Since the traction force $F_{trac}$ naturally changes size during normal driving, the present invention will function well for normal driving of the vehicle. Thus, the present invention uses a problem with prior art solutions to its advantage.

The present invention is thus less dependent on driving conditions than prior art solutions have been, since the method wants as much measurement data as possible in order to carry out a good estimate. This means that the method may run basically as long as the vehicle is driven. This represents a big difference in relation to prior art estimates, which require special driving conditions where data are sampled for a while, and subsequently estimate a value which may be good or bad, and without any knowledge about the quality of the estimate.

A covariance matrix, which is used for the recursion, describes the variance in the estimate and may therefore be used as a measure of quality on the estimate itself.

**Brief list of figures**

The invention will be illustrated in more detail below, along with the enclosed drawings where similar references are used for similar parts, and where:

Figure 1 shows a flow chart for a method according to the invention,

Figure 2 shows a graphic illustration of the algorithm according to the invention,

Figures 3a-d show simulation results,

Figure 4 shows a control device.

**Description of preferred embodiments**

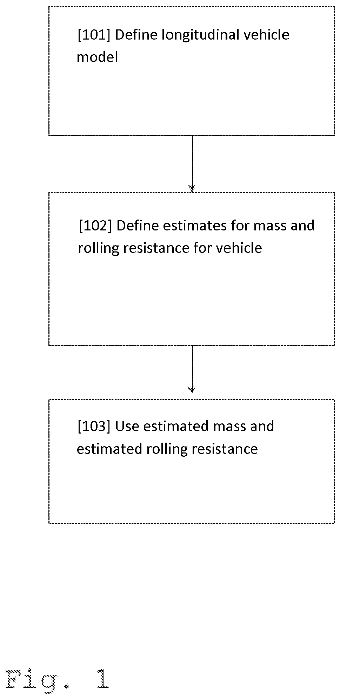

Figure 1 shows a flow chart for the method according to the present invention, where the method may be carried out by a system according to the present invention.

At a first step 101 of the method, which may be carried out by e.g. a model unit, a longitudinal vehicle model is defined. The vehicle model comprises representations of forces with a horizontal action on the vehicle in valid driving conditions.

According to one embodiment of the present invention, the valid driving conditions consist of the driving conditions where the vehicle model is valid, i.e. a correct description of the vehicle. The vehicle model is valid when a turning force acting on the vehicle is negligible and when a traction force $F_{trac}$ acting on the vehicle is known. Since the turning force is negligible, substantially no side forces are acting on the vehicle, e.g. in the form of centrifugal-like forces when the vehicle is turning, in the valid driving conditions. The valid driving conditions, where the turning force is negligible, therefore comprise e.g. driving conditions where the vehicle is driven substantially straight forward, i.e. without turning. In the event of the valid driving conditions, substantially no extra friction forces related to turns impact on the vehicle such extra friction forces arising e.g. for wheels in vehicles with several wheel pairs in the event of strong turns, e.g. by the wheels being dragged sideways, which produces a greater ground friction. These extra friction forces typically arise for vehicles with several wheel pairs, such as vehicles with trailers or several wheel shafts.

The vehicle model is thus valid when side forces acting on the vehicle are negligible and where a traction force $F_{trac}$ acting on the vehicle is known. The traction force $F_{trac}$ constitutes, here and in this document, the total driving or braking force which acts on the vehicle. The traction force $F_{trac}$ is e.g. known in driving conditions where the vehicle is driven by a driving force provided by a combustion engine, such as a petrol engine, a diesel engine or electric machinery, where the driving force is known. The traction force $F_{trac}$ is also known in driving conditions comprising braking with auxiliary brakes, for which the braking force is known, e.g. in the event of exhaust braking, retarder braking and/or braking through the use of a braking torque provided by electric machinery.

In a second step of the method, which may e.g. be carried out by a determination device, an estimated mass $m^{est}$ is determined for the vehicle, as well as a representation of an estimated rolling resistance force $F_{roll}^{est}$ which acts on the vehicle. The determination of the estimated mass $m^{est}$ and the representation of the estimated rolling resistance force $F_{roll}^{est}$ is carried out by using the longitudinal vehicle model jointly with the known values, which are available for the representations of the forces in the vehicle model, to minimise a model error in the longitudinal vehicle model defined in the first step 101. The known values for the representations of the forces may here be based on measured and/or assumed parameters which are related to the representations of the forces. Measured parameters in this context and in this document means parameter values which are e.g. measured during the operation of the vehicle, where such measurement may occur in real time. The estimation of the mass $m^{est}$ and the representation of the rolling resistance force $F_{roll}^{est}$ by minimising the model error will be described in more detail below.

In a third step of the method 103, a utilisation device then uses the estimated mass $m^{est}$ for the vehicle and the representation of the estimated rolling resistance force $F_{roll}^{est}$. According to one embodiment, the use comprises that control systems and other systems, using the vehicle mass $m^{est}$ and/or the representation of the estimated rolling resistance force $F_{roll}^{est}$ as parameters in their calculations, are provided with these new estimated values, so that calculations may be based on the estimated values for the vehicle mass $m^{est}$ and/or the representation of the rolling resistance force $F_{roll}^{est}$ according to the invention.

Through the method according to the present invention, a high quality and simultaneous estimation of both the vehicle mass $m^{est}$ and the representation of the rolling resistance force $F_{roll}^{est}$ are obtained, which may be carried out substantially all the time when the vehicle is in an approved driving condition, which during normal driving means very often.

The method for the estimation according to the invention may, according to one embodiment, be carried out in response to an indication that new estimates of the vehicle mass $m^{est}$ and of the representation of the estimated rolling resistance force $F_{roll}^{est}$ should be carried out and/or speeded up because changes have occurred. Such an indication may, according to one embodiment of the present invention, be the result of a method where a longitudinal vehicle model is defined so that it comprises representations of forces with horizontal action on the vehicle in a valid driving condition. Subsequently, it is determined whether a change in one or several of a representation of an actual rolling resistance force $F_{roll}^{act}$ and an actual mass $m^{act}$ for the vehicle has occurred. This determination includes a determination of whether the representations of the forces with horizontal impact on the vehicle cancel each other out, when an estimated mass $m^{est}$ and a representation of an estimated rolling resistance force $F_{roll}^{est}$ are introduced into the longitudinal vehicle model. According to one embodiment, a residual-based detector is arranged to identify changes in the mass $m^{est}$ and/or in the representation of the rolling resistance force $F_{roll}^{est}$. Subsequently, these identifications are used to provide the indication that new estimates are required and/or that estimates should be carried out faster by adjusting the reinforcement in the least-square estimate, so that the estimate will reach a correct value faster than if the reinforcement had remained unchanged. Similarly, a method for the estimate according to the invention may be carried out in response to an indication that new estimates of the air resistance parameter $C_{air}^{est}$ and the road gradient $\alpha^{est}$ should be carried out and/or accelerated because changes have occurred.

According to one embodiment of the present invention, the longitudinal vehicle model is based on Newton's second law, i.e. the so-called force equation.

If a vehicle fails to turn or to be impacted by an unknown driving or braking force, the external forces which impact the vehicle are based on the air resistance, the rolling resistance and the gravity due to the road gradient.

These forces may be used to model the vehicle according to Newton's second law, where the representations of forces constitute forces in Newton's second law, so that the vehicle's longitudinal movement may be described as:

$$m \cdot a = F_{trac} - F_{air} - F_{slope} - F_{roll} \qquad \text{(equation 3}$$

If

$$F_{roll} = m \cdot g \cdot C_r \text{ and} \qquad \text{(equation 4)}$$

$$F_{slope} = m \cdot g \cdot \sin\alpha; \qquad \text{(equation 5)}$$

equation 3 may be written as:

$$m \cdot a = F_{trac} - F_{air} - m \cdot g \cdot \sin\alpha - m \cdot g \cdot C_{r,}; \qquad \text{(equation 6)}$$

Where

- a is the above-mentioned vehicle acceleration, which may be calculated based on vehicle speed, e.g. with the use of a speed sensor on the vehicle's wheels, or may be determined with an accelerometer;
- $m$ is the total vehicle mass, which is estimated; [
- $g$ is the gravitational constant;
- $Cr$ is the above-mentioned rolling resistance coefficient, which may be estimated or assumed to be constant;
- $F_{air} = C_{air} \cdot v^2$ is the air resistance force, which consists of an air resistance parameter $C_{air}$ times the speed $v$ squared, where the air resistance parameter $C_{air}$ may be estimated or a model may be created for it, in which the air resistance parameter $C_{air}$ may be assumed to be constant, and where the speed $v$ may be measured e.g. with a speed sensor on the vehicle's wheels;
- $\alpha$ is the current road gradient, which may be measured with an accelerometer or obtained from GPS with map data;
- $Ftrac$ is the traction force, which constitutes the total driving or braking current torque, converted into a total driving or braking external force with the help of gearings in the vehicle's driveline and wheel radius. The current torques are typically provided by the torque sources which impact the vehicle, such as a combustion engine, electric machinery, or auxiliary brakes such as retarder or exhaust brakes. Thus, the traction force $F_{trac}$ may be calculated based on reports from such torque sources, if the driveline's current gearings are known and if the wheel radius is known or may be estimated. The traction force may then be calculated according to $F_{trac} = T_{trac} \cdot n_{gear\,box} \cdot n_{final\,drive}/r_{wheel}$, where the torque $T_{trac}$ is created before the gearbox, $n_{gear\,box}$ and $n_{final\,drive}$ consist of gearings for the gearbox and the end gear, and $r_{wheel}$ is the wheel radius.

According to one embodiment of the present invention, the longitudinal vehicle model is based on Newton's second law for rotation speeds, inertias and torques, also called Newton's second law for rotation. Thus, the representations of forces with horizontal impact are here based on these rotation speeds, inertias and torques. Torques and speeds in the driveline depend, for purposes of Newton's second law for rotation, on a selection of a reference point in the driveline, i.e. at which point in the driveline the torque equilibrium is calculated, due to the driveline's gearings in e.g. the gearbox.

For a reference point at the vehicle's wheels, the vehicle's longitudinal movement may be expressed as:

$$m \cdot r_{wheel}^2 \cdot \dot{\omega}_{wheel} = T_{trac} - T_{resistance}$$

(equation 7)

where

- *m* is the total vehicle mass, which is estimated;

- *rwheel* is a wheel radius for the vehicle's wheels;

- $\dot{\omega}_{wheel}$ is the angular acceleration for the current reference point, i.e. for the vehicle's wheel shaft, where the reference point in equation 6 is at the vehicle's wheels. The angular acceleration $\dot{\omega}_{wheel}$ may for example be calculated with a derivative of the signal from a speed sensor placed somewhere along the driveline, if the gearings between the sensor's position and the reference point are known. In many vehicles, e.g. in modern trucks, there is often a speed sensor on the engine and after the gearbox. Vehicles with some form of automated shifting system often also have sensors in the gearbox. Vehicles with electric brake systems often have sensors on one or several of the wheels. Angular acceleration may also be calculated with an accelerometer if the wheel radius is known;

- *Ttrac* is a total traction torque, which constitutes the total driving or braking torque applied at the current reference point, i.e. to the vehicle's wheels for equation 6; and

- $T_{resistance}$ is a total driving resistance torque, which at the reference point at the vehicle's wheels consists of the driving resistance forces $F_{air}$, $F_{slope}$ and $F_{roll}$ multiplied by the wheel radius $r_{wheel}$ as follows: $T_{resistance} = T_{resistance} = (F_{air}+F_{slope}+F_{roll}) \cdot r_{wheel}$, where $F_{air}$, $F_{slope}$ and $F_{roll}$ are defined as described above according to $F_{air} = C_{air} \cdot v^2$ and in equations 4-5.

For Newton's second law for rotation, the traction torque $T_{trac}$ depends on the placement of the reference point for balance, since the traction torque $T_{trac}$ is a sum of the torques that impact different points along the driveline. Different actuators in the vehicle add torque at different places in the driveline, which means that the torques must be scaled with any gear ratios and efficiencies between the point where the torques affect the driveline and the reference point, when the total traction torque $T_{trac}$ in the reference point is to be calculated. For example, the engine's torque operates before the gearbox while a retarder circuit torque operates after the gearbox, which means that different gearings are used for the engine and the retarder circuit, respectively, when the total traction torque $T_{trac}$ is calculated. The driving resistance torque $T_{resistance}$ needs to be scaled for different reference points because of gearings along the driveline.

A person skilled in the art will realise that the traction torque $T_{trac}$ is changed by gearings along the driveline and/or that the driving resistance torque $T_{resistance}$ may need to be scaled along the driveline, from the engine to the vehicle's wheels, and that the equation 6 applies generally to all different reference points along the driveline, while the expressions for traction torque $T_{trac}$ and/or the driving resistance torque $T_{resistance}$ have different appearances and different scaling for different reference points.

The speed sensor's placement also impacts the balance and thus an appearance of the balance expression, since the engine speed must also be rescaled to the relevant reference point. If the speed sensor is placed between the engine and the reference point, for which the balance is calculated, the torque balance, and thus the vehicle model, may generally be described as:

$$m \cdot r_{wheel}^2 / n_{wheelToRef}^2 \cdot \dot{\omega}_{sensor} / n_{sensorToRef} = T_{trac} - T_{resistance} / n_{wheelToRef}$$

(equation 8)

where

- *m* is the total vehicle mass, which is estimated;

- *rwheel* is the vehicle's wheel radius;

- $\dot{\omega}$sensor is an angular acceleration for a given position for the speed sensor;

- *Ttrac* is a total traction torque; and

- *Tresistance* is a total driving resistance torque; $T_{resistance} = (F_{air}+F_{slope}+F_{roll}) \cdot r_{wheel}$, where $F_{air}$, $F_{slope}$ and $F_{roll}$ are defined in the manner described above according to $F_{air} = C_{air} \cdot v^2$ and in equations 4-5;

- *nsensorToRef* is a gear ratio between the speed sensor and the reference point, including potential losses in the gears; and

- *nwheelToRef* is a gear ratio between the wheels and the reference point, including potential losses in the gears.

If the speed sensor is placed, instead, between the reference point, for which the balance is calculated, and the wheels, the torque balance, and thus the vehicle model, may generally be described as:

$$m \cdot r_{wheel}^2 / n_{wheelToRef}^2 \cdot \dot{\omega}_{sensor} \cdot n_{sensorToRef} = T_{trac} - T_{resistance}/n_{wheelToRef}$$

(equation 9)

where

- *m* is the total vehicle mass, which is estimated;
- *rwheel* is the vehicle's wheel radius;
- $\dot{\omega}_{sensor}$ is an angular acceleration for a given position for the speed sensor;
- *Ttrac* is a total traction torque; and
- *Tresistance* is a total driving resistance torque; $T_{resistance} = (F_{air}+F_{slope}+F_{roll}) \cdot r_{wheel}$, where $F_{air}$, $F_{slope}$ and $F_{roll}$ are defined in the manner described above according to $F_{air} = C_{air} \cdot v^2$ and in equations 4-5;
- *nsensorToRef* is a gear ratio between the speed sensor and the reference point, including potential losses in the gears; and
- *nwheelToRef* is a gear ratio between the wheels and the reference point, including potential losses in the gears.

Where the longitudinal vehicle model is based on Newton's second law for rotation, the representations of the forces are thus equivalent to torque, i.e. the traction force $F_{trac}$ is equivalent to the traction torque $T_{trac}$ and the driving resistance force $F_{drivingres}$ is equivalent to the driving resistance torque $T_{resistance}$. Thus, the rolling resistance force $F_{roll}$ is equivalent to the rolling resistance torque $T_{roll}$, the air resistance force $F_{air}$ is equivalent to the air resistance torque $T_{air}$, and a force caused by the road's gradient $F_{slope}$ is equivalent to a torque caused by the road's gradient $T_{slope}$. The acceleration *a* is equivalent to the angular acceleration $\dot{\omega}$.

Below is a description of how the estimation of e.g. the vehicle mass $m^{est}$ and the representation of the rolling resistance force $F_{roll}^{est}$ according to the invention is carried out, where Newton's second law based on forces is used for the vehicle model, i.e. based on equation 6, so that the representations of the forces constitute the forces with a horizontal effect according to the vehicle model. A similar estimation of e.g. the vehicle mass $m^{est}$ and the representation of the rolling resistance force $F_{roll}^{est}$ according to the invention may also be carried out, where Newton's second law based on rotation is used as a vehicle model, so that the representations of the forces constitute rotation speeds, inertias and torques, as described above. In other words, the estimation of e.g. the vehicle mass $m^{est}$ and the representation of the rolling resistance force $F_{roll}^{est}$ according to the invention may also be carried out based on any of equations 7-9. A person skilled in the art may, with the help of the above description of Newton's second law for rotation, derive method steps and/or expressions corresponding to the estimation, described below, of the vehicle mass $m^{est}$ and the representation of the rolling resistance force $F_{roll}^{est}$, according to the invention, also for Newton's second law for rotation.

As described above, the known values for the representations of the forces are the longitudinal vehicle model, e.g. described in equation 6, measured or determined with a model.

The driving resistance model may be obtained through a reformulation of the rolling resistance model in equation 6:

$$a + g \cdot \sin\alpha - \frac{1}{m^{est}} \cdot (F_{trac} - F_{air}) + C_r^{est} \cdot g = 0, \quad \text{(equation 10)}$$

where

- $\alpha$ is the above-mentioned vehicle acceleration;

- $m$ is a total vehicle mass, to be estimated;

- $g$ is the above-mentioned gravity constant;

- $Crest$ is a rolling resistance coefficient, to be estimated;

- $Fair$ is the above-mentioned air resistance force;

- $\alpha$ is the above-mentioned road gradient;

- $Ftrac$ is the above-mentioned traction force.

The expression in equation 10 is particularly suitable for the use of a recursive least-square estimation to minimise the model error, which will be described in more detail below. The division with vehicle mass to be estimated $m^{est}$ is used here to separate the rolling resistance coefficient $C_r^{est}$ from the vehicle mass $m^{est}$ in equation 10.

As shown by equation 10, the representation of the rolling resistance force $F_{roll}^{est}$ is estimated here by first determining an estimated rolling resistance coefficient $C_r^{est}$, following which the representation of the rolling resistance force is calculated as:

$$F_{roll}^{est} = C_r^{est} \cdot m^{est} \cdot g .$$

According to one embodiment of the invention, the estimation of the vehicle mass $m^{est}$ and the representation of the rolling resistance force $F_{roll}^{est}$ are determined by way of minimizing the model error, i.e. through minimizing the error obtained for the longitudinal vehicle model when the parameters to be estimated are introduced into the model, and when the representations of the known forces, which may be based on measured and/or assumed parameters related to the representations of the forces, are introduced into the model.

The minimisation may here be carried out through the use of a recursive method for identification of estimated values, which provide a least-square error for the longitudinal vehicle model, compared to similar known values for the representations of the forces. Other methods for minimising the model error may also be used at the determination, such as a least-mean-square method, a normalised least-mean-square method, and a recursive least-square method, a least-square method with a forgetting factor, a recursive least-square method with a forgetting factor, a maximum likelihood method, or a method using Kalman filtering. Below is a description of a least-square estimation. A person skilled in the art will realise, however, that a similar estimation using a least-mean-square method, a normalised least-mean-square method, a recursive least-square method, a least-square method with a forgetting factor, a recursive least-square method with a forgetting factor, a maximum likelihood method, or a method using Kalman filtering may be deduced. Substantially, all suitable methods which may find parameter values minimising a model error may be used for estimations according to the present invention, as a person skilled in the art will realise.

If the equation 10 is vector-factorised, the following is obtained:

$$a[n] + g \cdot \sin\alpha[n] - \begin{bmatrix} F_{trac}[n] - F_{air}[n], & -g \end{bmatrix} \cdot \begin{bmatrix} 1/m^{est}[n] \\ C_r^{est}[n] \end{bmatrix}$$

(equation 11)

and if the vectors are given the following names:

$$\hat{\theta}[n] = \begin{bmatrix} 1/m^{est} \\ C_r^{est} \end{bmatrix}, \qquad \text{(equation 10)}$$

$$\varphi[n] = \begin{bmatrix} F_{trac}[n] - F_{air}[n] \\ -g \end{bmatrix} \qquad \text{(equation 13)}$$

and

$$y[n] = a[n] + g \cdot \sin\alpha[n] \qquad \text{(equation 14)}$$

equation 11 may be written as:

$$y[n] - \varphi^T[n] \cdot \hat{\theta}[n] \qquad \text{(equation 15)}$$

Equation 15 may be used in a standard form for a recursive least-square estimation, which is very advantageous. A recursive least-square estimation is described in detail below.

According to one embodiment of the present invention, the determination of the parameters comprise a determination of the estimated vehicle mass $m^{est}$, the representation of the rolling resistance force $F_{roll}^{est}$ and an estimated rolling resistance parameter $C_{air}^{est}$ which acts one the vehicle.

The driving resistance model according to equation 6 may be re-written as:

$$a + g \cdot \sin\alpha - \frac{1}{m^{est}} \cdot F_{trac} + \frac{C_{air}^{est}}{m^{est}} \cdot v^2 + C_r^{est} \cdot g = 0, \qquad \text{(equation 16)}$$

where

- $a$ is the above-mentioned vehicle acceleration;

- $mest$ is the above-mentioned total vehicle mass, to be estimated;

- $g$ is the gravitational constant;

- $Crest$ is the above-mentioned rolling resistance coefficient, which is to be estimated;

- $Cairest$ is the above-mentioned air resistance parameter, which is to be estimated;

- $\alpha$ is the above-mentioned current road gradient;

- $Ftrac$ is the above-mentioned traction force.

As shown by equation 16, the representation of the air resistance force $F_{air}^{est}$ is estimated here by first determining an estimated air resistance parameter $C_{air}^{est}$, following which the representation of the air resistance force is calculated as: $F_{air}^{est} = C_{air}^{est} * v^2$. Since varying values for the air resistance parameter $C_{air}^{est}$ easily may be estimated through the present embodiment, the above-mentioned problems related to inaccurate assumptions about the air resistance parameter $C_{air}^{est}$ being a predetermined constant may be avoided, e.g. at the reconstruction and connection or disconnection of trailers which typically give rise to changed values for the air resistance force.

According to one embodiment of the invention, in a similar manner as described above, the estimation of the vehicle mass $m^{est}$, the representation of the rolling resistance force $F^{est}_{roll}$ and the air resistance parameter $C^{est}_{air}$ are determined through minimising the model error for the vehicle model. The minimisation may here be carried out through the use of a recursive method for identification of estimated values, which provide a least-square error for the longitudinal vehicle model with the estimated values introduced, and with the above-mentioned known values for other representations of the forces introduced. This method will be described below. However, e.g. a least-mean-square method, a normalised least-mean-square method, a recursive least-square method, a least-square method with a forgetting factor, a recursive least-square method with a forgetting factor, a maximum likelihood method, or a method using Kalman filtering may be used to find estimated values minimising the model error.

Equation 16 may be factored as follows:

$$a[n] + g \cdot \sin\alpha[n] - \begin{bmatrix} F_{trac}[n], & -g, & -v^2 \end{bmatrix} \cdot \begin{bmatrix} 1/m^{est}[n] \\ C^{est}_r[n] \\ \dfrac{C^{est}_{air}}{m^{est}} \end{bmatrix} \quad \text{(equation 17)}$$

If the vectors are named as follows:

$$\theta\hat{\theta}[n] = \begin{bmatrix} 1/m^{est}[n] \\ C^{est}_r[n] \\ \dfrac{C^{est}_{air}}{m^{est}} \end{bmatrix} \qquad \text{(equation 18)}$$

$$\varphi[n] = \begin{bmatrix} F_{trac}[n] \\ -g \\ -v^2 \end{bmatrix}, \qquad \text{(equation 19)}$$

and

$$y[n] = a[n] + g \cdot \sin\alpha[n] \qquad \text{(equation 20)}$$

equation 14 may be written as:

$$y[n] - \varphi^T[n] \cdot \hat{\theta}[n] \qquad \text{(equation 21)}$$

Equation 21 may be used in a standard form for a recursive least-square estimation, which is very advantageous. A recursive least-square estimation is described in detail below.

According to one embodiment of the invention, the determination of parameters comprises a determination of the estimated vehicle mass $m^{est}$, the representation of the estimated rolling resistance force $F^{est}_{roll}$ and an estimated road gradient $\alpha^{est}$ experienced by the vehicle.

Here the longitudinal vehicle model may be described as:

$$a + g \cdot \sin\alpha^{est} - \frac{1}{m^{est}} \cdot (F_{trac} - F_{air}) + C^{est}_r \cdot g = 0 \quad \text{(equation 22)}$$

where

- $a$ is a vehicle acceleration;

- $m^{est}$ is a total vehicle mass, to be estimated;

- $g$ is the gravitational constant;

- $C_r^{est}$ is a rolling resistance coefficient, to be estimated;

- $F_{air}$ is an air resistance;

- $\alpha^{est}$ is a current road gradient, to be estimated

- $F_{trac}$ is a traction force.

According to one embodiment of the invention, the estimated vehicle mass $m^{est}$, the representation of the rolling resistance force $F_{roll}^{est}$ and the road gradient $\alpha^{est}$ are determined in the manner described above, through minimising the model error for the vehicle model. The minimisation may also in this case be carried out through the use of a recursive method for the identification of estimated values, which provide a least-square error for the longitudinal vehicle model with the estimated parameters introduced, and with the known values for other representations of the forces introduced, or through the use of any of the above-mentioned methods for the minimisation minimising the model error.

If the equation 19 is vector-factorised, the following is obtained:

$$a[n] - \begin{bmatrix} F_{trac}[n] - F_{air}[n], & -g \end{bmatrix} \cdot \begin{bmatrix} 1/m^{est}[n] \\ C_r^{est}[n] + \sin(\alpha^{est}[n]) \end{bmatrix} \quad \text{(equation 23)}$$

and the vectors are named as follows:

$$\hat{\theta}[n] = \begin{bmatrix} 1/m^{est} \\ C_r^{est} + \sin(\alpha^{est}[n]) \end{bmatrix}, \quad \text{(equation 24)}$$

$$\varphi[n] = \begin{bmatrix} F_{trac}[n] - F_{air}[n] \\ -g \end{bmatrix} \quad \text{(equation 25)}$$

and

$$y[n] = a[n] \quad \text{(equation 26)}$$

equation 20 may be written as:

$$y[n] - \varphi^T[n] \cdot \hat{\theta}[n]. \quad \text{(equation 27)}$$

Equation 27 may be used in a standard form for a recursive least-square estimation, which is very advantageous. A recursive least-square estimation is described in detail below.

According to one embodiment of the invention, the determination of parameters comprises a determination of the estimated vehicle mass $m^{est}$, the representation of the estimated rolling resistance force $F_{roll}^{est}$, an estimated air resistance parameter $C_{air}^{est}$ and an estimated road gradient $\alpha^{est}$ experienced by the vehicle.

Here the longitudinal vehicle model may be described as:

$$a + g \cdot \sin\alpha^{est} - \frac{1}{m^{est}} \cdot F_{trac} + \frac{C_{air}^{est}}{m^{est}} \cdot v^2 + C_r^{est} \cdot g = 0 \quad \text{(equation 28)}$$

where

- $a$ is a vehicle acceleration;

- $m^{est}$ is a total vehicle mass, to be estimated;

- $g$ is the gravitational constant;

- $C_r^{est}$ is a rolling resistance coefficient, to be estimated;

- $C_{air}^{est}$ is the above-mentioned air resistance parameter, which is to be estimated;

- $\alpha^{est}$ is a current road gradient, to be estimated

- $F_{trac}$ is a traction force

According to one embodiment of the invention, in a similar manner as described above, the estimation of the vehicle mass $m^{est}$, the representation of the rolling resistance force $F_{roll}^{est}$, the air resistance parameter $C_{air}^{est}$ and the road gradient $\alpha^{est}$ are determined through minimising the model error for the vehicle model. The minimisation may also in this case be carried out through the use of a recursive method for the identification of estimated values, which provide a least-square error for the longitudinal vehicle model with the estimated parameters introduced, and with the known values for other representations of the forces introduced, or through the use of any of the above-mentioned methods for to minimise the model error.

Equation 25 may be factorised as follows:

$$[n] - \begin{bmatrix} F_{trac}[n], & -g, & -v^2 \end{bmatrix} \cdot \begin{bmatrix} 1/m^{est}[n] \\ C_r^{est}[n] + \sin(\alpha^{est}[n]) \\ \dfrac{C_{air}^{est}}{m^{est}} \end{bmatrix} \quad \text{(equation 29)}$$

If the vectors are named as follows:

$$\hat{\theta}[n] = \begin{bmatrix} 1/m^{est}[n] \\ C_r^{est}[n] + \sin(\alpha^{est}[n]) \\ \dfrac{C_{air}^{est}}{m^{est}} \end{bmatrix}, \quad \text{(equation 30)}$$

$$\varphi[n] = \begin{bmatrix} F_{trac}[n] \\ -g \\ -v^2 \end{bmatrix} \quad \text{(equation 31)}$$

and

$$y[n] = a[n] \quad \text{(equation 32)}$$

equation 29 may be written as:

$$y[n] - \varphi^T[n] \cdot \hat{\theta}[n] \qquad \text{(equation 33)}$$

Equation 33 may be used in a standard form for a recursive least-square estimation, which is very advantageous. A recursive least-square estimation is described in detail below.

According to one embodiment the above-mentioned recursive least-square method for to minimise the model error squared entails that the calculations are updated at each time step, i.e. each time new measurement data are provided. When new measurement data are provided, only these new data, i.e. measurement data sampled at this time step, need to be used when calculations are made. Thus the recursive minimising of the model error has an advantage in that the calculations do not require providing long measurement vectors of gathered data, which means that the memory requirement is reduced. The recursive method also comprises the use of a forgetting factor, which specifies a filter constant $\lambda$ determining how long the measurement data must be remembered in the calculations.

The recursion at the time step *n,* which uses calculated values for a previous time step *n-1,* may be described as:

$$\hat{\theta}[n] = \hat{\theta}[n-1] + K[n] \cdot \left(y[n] - \varphi^T[n] \cdot \hat{\theta}[n-1]\right) \qquad \text{(equation 34)}$$

$$K[n] = P[n] \cdot \varphi[n] \qquad \text{(equation 35)}$$

$$P[n] = \left(P[n-1] - \frac{P[n-1]\cdot\varphi[n]\cdot\varphi^T[n]\cdot P[n-1]}{\lambda+\varphi^T[n]\cdot P[n-1]\varphi[n]}\right)/\lambda. \qquad \text{(equation 36)}$$

Here $\hat{\theta}[n]$, $y[n]$ and $\varphi[n]$ are obtained from equations 15, 21, 27 or 33 , where $y[n]$ and $\varphi[n]$ constitute measurements at the point in time *n*.

The parameter $\lambda$ is a filter constant constituting a so-called forgetting factor, which specifies how long data measured must remain in the recursion. For the parameter value $\lambda=1$ the estimate adapts to all previously measured data. According to one embodiment of the invention, the filter constant is set at a value of less than one, $\lambda<1$, since the rolling resistance may be altered while driving, which is why forgetting old measurements after a suitably selected time period often improves the quality of the estimates.

$P[n]$ is a covariance matrix with a size depending on the number of rows in the vector $\hat{\theta}[n]$. If the vector $\hat{\theta}[n]$ has *N* rows, then the matrix $P[n]$ is a *NxN* matrix. The covariance matrix $P[n]$ may also be used to provide a quality measurement of the estimate, since the variance for the estimation may be read from the matrix $P[n]$

The recursion may be seen as though the estimation $\hat{\theta}[n]$ at the time step *n* is updated with a reinforcement $K[n]$ times the model error. The reinforcement $K[n]$ depends on the variance for the measurement data and on the forgetting factor $\lambda$.

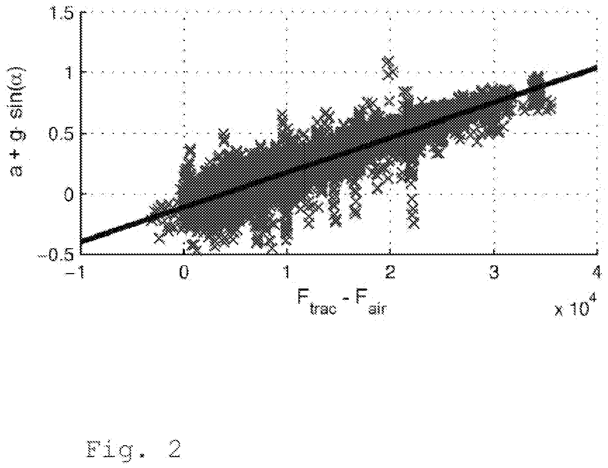

Figure 2 shows a non-limiting graphic illustration of the problem which the present invention is designed to resolve. Vehicle acceleration $\alpha$ and the road gradient $\alpha$ are specified along the y-axis as a function of traction force minus air resistance, $F_{trac}$-$F_{air}$, along the x-axis. If data collected from valid driving conditions while driving are introduced in the diagram, it becomes apparent that the data are located relatively gathered, so that it is possible to draw a line straight through the amount of data.

The line may be analysed with the help of the equation of the straight line:

$$y = k \cdot x + b, \qquad \text{(equation 37)}$$

where *k* is the gradient of the line and *k* is the crossing point with the y-axis. Let the variables for the line be provided by:

$$y = a + g \cdot \sin\alpha \qquad \text{(equation 38)}$$

and

$$x = F_{trac} - F_{air} \qquad\qquad \text{(equation 39)}$$

If equation 10 is compared to equation 37 for the line in Figure 2, it may be concluded that the gradient $k$ for the line should be $k = 1/m$ and the crossing with the y-axis should be $b = -g \cdot C_r$ in order for equation 37 to be adapted to equation 10. In order to find the line that best suits the measurement data, the vehicle mass $m$ and the rolling resistance coefficient $C_r$ must be estimated, which is precisely what the present invention does.

Figure 2 also illustrates an advantage with the method according to the present invention, since the picture clearly shows that it is easier to achieve a suitable gradient of the line if there is a lot of data spread over the x-axis to align against. Thus, it is actually a good thing if the traction force minus the air resistance force, $F_{trac}$-$F_{air}$ varies in size when the measurements are carried out. Since the traction force $F_{trac}$ naturally changes size during normal driving, the present invention will function well during a large part of the time for normal driving of the vehicle, since during this time it is more common that the forces are varied than that they are in static operating points. This is a great advantage compared to prior art solutions.

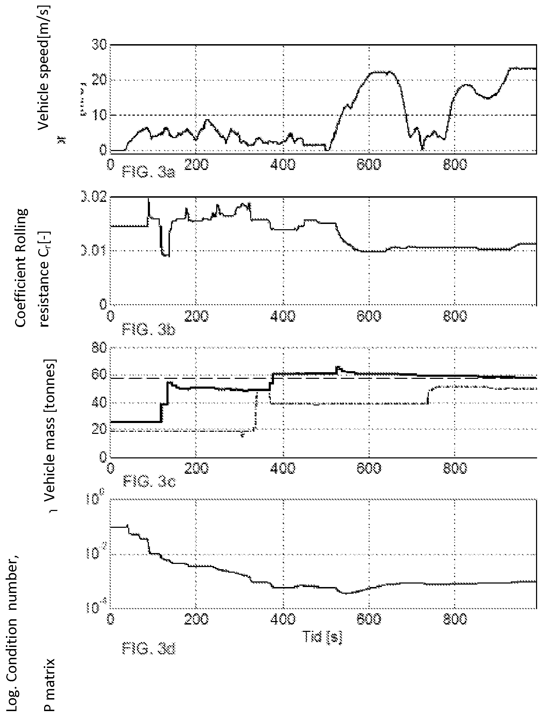

Figures 3a-d show a non-limiting example of the method according to the present invention during actual operation. In this example, the vehicle has an actual mass of around 60 tonnes.

Figure 3a shows the vehicle speed during driving and Figure 3b shows the estimated rolling resistance coefficient $C_r$. At a point in time just after 500 s, the vehicle drives from gravel/sand to asphalt, so that the rolling resistance coefficient $C_r$ falls significantly, which corresponds well to reality.

Figure 3c shows the actual mass, i.e. approximately 60 tonnes, with a dashed line. The vehicle has initially been at a standstill and a trailer has been connected to the vehicle. The thick solid curve shows the mass estimate according to the present invention. The dashed curve shows a median value of prior art estimates, i.e. estimates that require a certain driving condition, during which they sample for a while and subsequently make a calculation. The more estimates of the prior art type that are carried out, the closer the actual values approximate to the estimate. However, sometimes this takes a considerable amount of time.

Figure 3d shows the condition number for the covariance matrix $P[n]$. The curve is drawn on a logarithmic scale, since it has a relatively high value at the beginning of the driving. Here it is clear that the curve falls relatively quickly at the beginning of driving, when the estimate becomes better and the quality of the estimate improves. Subsequently, it remains around a relatively low value, which entails that the quality remains good. The fluctuations around the low value are caused by changes in the signal noise.

A person skilled in the art will realise that a method for estimation of parameters impacting a driving resistance $F_{drivingres}$ for a vehicle according to the present invention, may also be implemented in a computer program, which when executed in a computer achieves that the computer carries out the method. The computer program usually consists of a part of a computer program product 403, where the computer program product comprises a suitable digital storage medium on which the computer program is stored. Said computer readable medium consists of a suitable memory, e.g.: ROM (Read-Only Memory), PROM (Programmable Read-Only Memory), EPROM (Erasable PROM), Flash, EEPROM (Electrically Erasable PROM), a hard disk device, etc.

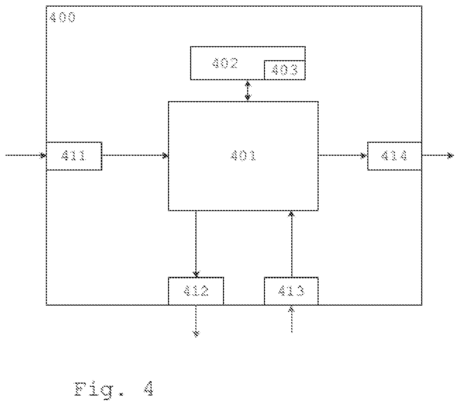

Figure 4 schematically shows a control device 400. The control device 400 comprises a calculation device 401, which may consist of essentially a suitable type of processor or microcomputer, e.g. a circuit for digital signal processing (Digital Signal Processor, DSP), or a circuit with a specific function (Application Specific Integrated Circuit, ASIC). The calculation device 401 is connected to a memory unit 402 installed in the control device 400, which provides the calculation device 401 with e.g. the stored program code and/or the stored data, which the calculation device 401 needs in order to be able to carry out calculations. The calculation device 401 is also set up to store interim or final results of calculations in the memory device 402.

Further, the control device 400 is equipped with devices 411, 412, 413, 414 for receiving and sending of input and output signals. These input and output signals may contain wave shapes, pulses, or other attributes, which by the devices 411, 413 for the receipt of input signals may be detected as information, and may be converted into signals that may be processed by the calculation device 401. These signals are then provided to the calculation device 401. The devices 412, 414 for sending of output signals are arranged to transform signals received from the calculation device 401 for the creation of output signals by e.g. modulating the signals, which may be transmitted to other parts of the vehicle.

Each one of the connections to the devices for receiving and sending of input and output signals may consist of one or several of a cable; a data bus, such as a CAN (Controller Area Network) bus, a MOST (Media Oriented Systems Transport) bus, or any other bus configuration; or of a wireless connection.

A person skilled in the art will realise that the above-mentioned computer may consist of the calculation device 401 and that the above-mentioned memory may consist of the memory device 402.

Generally, control systems in modern vehicles consist of a communications bus system, consisting of one or several communications buses to connect a number of electronic control devices (ECUs), or controllers, and different components localised on the vehicle. Such a control system may comprise a large number of control devices, and the responsibility for a specific function may be distributed among more than one control device. Vehicles of the type shown thus often comprise significantly more control devices than what is shown in Figure 4, which is well known to a person skilled in the art within the technology area.

The present invention is implemented in the embodiment displayed in the control device 400. The invention may, however, also be implemented wholly or partly in one or several other control devices already existing in the vehicle, or in a control device dedicated to the present invention.

According to one aspect of the present invention, a system is provided for the estimation of parameters impacting the driving resistance $F_{drivingres}$ for the vehicle. The system comprises a model device and a determination device. The model device is arranged to define the above described longitudinal vehicle model, which comprises representations of forces with a horizontal effect on the vehicle in one of the above-mentioned valid driving conditions. The determination device is arranged to determine an estimated mass $m^{est}$ for the vehicle and to determine a representation of an estimated rolling resistance force $F_{roll}^{est}$ which impacts the vehicle. The determination device is, as described above, arranged to base the determination of the mass $m^{est}$ and the representation of the rolling resistance force $F_{roll}^{est}$ on the longitudinal vehicle model in combination with known values for the representations of the forces with a horizontal effect on the vehicle, whereby the parameter values minimising the model error on the vehicle model may be identified.

A person skilled in the art will also realise that the above system may be modified according to the different embodiments of the method according to the invention, as specified by the system's non-independent patent claims below.

In addition, the invention pertains to a motor vehicle, e.g. a truck or a bus, comprising at least one system for the estimation of parameters impacting a driving resistance force $F_{drivingres}$ for a vehicle.

The present invention is not limited to the embodiments of the invention described above, but pertains to and comprises all embodiments within the protected scope of the enclosed independent claims.

**Claims**

**1.** Method for the estimation of parameters impacting a driving resistance force $F_{drivingres}$ for a vehicle, comprising

- a definition, by way of a model unit, of a longitudinal vehicle model, comprising representations of forces with horizontal impact on said vehicle in a valid driving mode; - a determination, with a determination device of an estimated mass $m^{est}$ for said vehicle, and of a representation of an estimated rolling resistance force $F_{roll}^{est}$ impacting said vehicle;
- a utilisation, with a utilisation device, of said estimated mass and said representation of said estimated rolling resistance force in vehicle systems adapted for automatic gear selection or cruise control,

**characterised in that** said longitudinal vehicle model is used jointly with known values for said representations of forces, in order to minimise a model error in said longitudinal vehicle model, wherein said known values for said representations of said forces comprise calculated values for said representations of said forces, which have been calculated based on measured parameters and/or assumptions about parameters which are related to said representations of said forces.

**2.** Method according to claim 1, wherein said valid driving mode constitutes a driving mode for which a turning force acting on said vehicle is negligible, and for which a traction force $F_{trac}$ acting on said vehicle is known.

**3.** Method according to any of claims 1-2, wherein said known values for said representations of forces are measured or determined with a model.

**4.** Method according to any of claims 1-3, wherein said determination of said representation of said estimated rolling resistance force $F_{roll}^{est}$ comprises a determination of an estimated rolling resistance coefficient $C_r^{est}$.

**5.** Method according to any of claims 1-4, wherein said longitudinal vehicle model is described by the equation:

$$a + g \cdot \sin\alpha - \frac{1}{m^{est}} \cdot (F_{trac} - F_{air}) + C_r^{est} \cdot g = 0,$$

where

- $a$ is a vehicle acceleration;
- $m^{est}$ is a total vehicle mass, to be estimated;
- $g$ is the gravitational constant;
- $C_r^{est}$ is a rolling resistance coefficient, to be estimated;
- $F_{air}$ is an air resistance force;
- $\alpha$ is a current road gradient;
- $F_{trac}$ is a traction force.

6. Method according to any of claims 1-3, wherein said determination comprises a determination of said estimated mass $m^{est}$, said representation of said rolling resistance force $F_{roll}^{est}$ and a representation of an estimated air resistance force $F_{air}^{est}$ acting on said vehicle.

7. Method according to any of claims 1-3, wherein said determination comprises a determination of said estimated mass $m^{est}$, said representation of said estimated rolling resistance force $F_{roll}^{est}$ and an estimated road gradient $\alpha^{est}$ experienced by said vehicle.

8. Method according to any of claims 1-3, wherein said determination comprises a determination of said estimated mass $m^{est}$, said representation of said estimated rolling resistance force $F_{roll}^{est}$, an estimated air resistance coefficient $C_{air}^{est}$ and an estimated road gradient $\alpha^{est}$ experienced by said vehicle.

9. Method according to any of claims 1-8, wherein said longitudinal vehicle model is based on Newton's second law.

10. Method according to any of claims 1-9, wherein minimising said model error is carried out through the use of a recursive method for the identification of estimated values, which provide a least-square error for said longitudinal vehicle model, with said estimated values introduced, and with said known values for other representations of forces introduced.

11. Method according to any of claims 1-10, wherein minimisation of said model error is carried out through the use of one of the methods in the group of:

- a least-mean-square method;
- a normalised least-mean-square method;
- a method using Kalman filtering;
- a recursive least-square method;
- a least-square method with forgetting factor;
- a recursive least-square method with forgetting factor, and
- a maximum likelihood method.

12. A computer program comprising a program code which, when said program code is executed in a computer, achieves that said computer carries out the method according to any of claims 1-11.

13. Computer program product comprising a computer-readable medium and a computer program according to claim 12, said computer program being comprised in said computer-readable medium.

14. System for the estimation of parameters impacting a driving resistance force $F_{drivingres}$ for a vehicle, comprising

- a model device arranged to define a longitudinal vehicle model, comprising representations of forces with a horizontal effect on said vehicle in a valid driving condition;

- a determination device arranged to determine an estimated mass $m^{est}$ for said vehicle and a representation of an estimated rolling resistance force $F_{roll}^{est}$ acting on said vehicle;
- a utilisation device arranged to use said estimated mass $m^{est}$ and said representation of said estimated rolling resistance force, **characterised in that** said longitudinal vehicle model is adapted to be used jointly with known values for said representations of said forces, in order to minimise a model error in said longitudinal vehicle model.

**15.** Motor vehicle comprising a system according to claim 14.

## Patentansprüche

**1.** Verfahren zum Schätzen von Parametern, die eine Fahrwiderstandskraft $F_{drivingres}$ eines Fahrzeugs beeinflussen, umfassend

- eine Definition, beispielsweise eine Modelleinheit, eines Fahrzeuglängsmodells, umfassend Wiedergabe von Kräften mit horizontalem Einfluss auf das Fahrzeug in einem gültigen Fahrzustand;
- eine Ermittlung, mit einer Ermittlungsvorrichtung, einer geschätzten Masse $m^{est}$ für das Fahrzeug, und eine Wiedergabe einer geschätzten Rollwiderstandskraft $F_{roll}^{est}$, die das Fahrzeug beeinflusst;
- eine Nutzung, mit einer Nutzungsvorrichtung, der geschätzten Masse und der Wiedergabe der geschätzten Rollwiderstandskraft in Fahrzeugsystemen, die für eine automatische Gangauswahl oder eine Fahrsteuerung eingerichtet sind,

**dadurch gekennzeichnet, dass** das Fahrzeuglängsmodell zusammen mit bekannten Werten für die Wiedergabe von Kräften genutzt wird, um den Modellfehler in dem Fahrzeuglängsmodell zu minimieren, wobei die bekannten Werte für die Wiedergabe der Kräfte berechnete Werte für die Wiedergabe der Kräfte umfasst, die auf Basis von ermittelten Parametern und/oder Annahmen über Parameter berechnet wurden, die in Bezug zu der Wiedergabe von Kräften stehen.

**2.** Verfahren nach Anspruch 1, wobei der gültige Fahrmodus einen Fahrmodus darstellt, bei dem eine auf das Fahrzeug wirkende Drehkraft vernachlässigbar ist, und bei dem eine auf das Fahrzeug wirkende Traktionskraft $F_{Traction}$ bekannt ist.

**3.** Verfahren nach einem der Ansprüche 1-2, wobei die bekannten Werte für die Wiedergabe von Kräften gemessen oder mit einem Modell ermittelt werden.

**4.** Verfahren nach einem der Ansprüche 1-3, wobei die Ermittlung der Wiedergabe der geschätzten Rollwiderstandskraft $F_{roll}^{est}$ eine Ermittlung eines geschätzten Rollwiderstandskoeffizienten $C_r^{est}$ umfasst.

**5.** Verfahren nach einem der Ansprüche 1-4, wobei das Fahrzeuglängsmodell durch die Gleichung beschrieben ist:

$$a + g * \sin\alpha - \frac{1}{m^{est}} * (F_{trac} - F_{air)} + C_r^{est} * g = 0$$

wobei

- $a$ eine Fahrzeugbeschleunigung ist;
- $m^{est}$ eine Gesamtfahrzeugmasse ist, die geschätzt werden soll;
- $g$ die Gravitationskonstante ist;
- $C_r^{est}$ ein Rollwiderstandskoeffizient ist, der geschätzt werden soll;
- $F_{air}$ eine Luftwiderstandskraft ist;
- $\alpha$ ein aktueller Fahrbahngradient ist;
- $F_{trac}$ eine Traktionskraft ist.

6.  Verfahren nach einem der Ansprüche 1-3, wobei die Ermittlung eine Ermittlung der geschätzten Masse $m_{est}$, eine Wiedergabe der Rollwiderstandskraft $F_{roll}^{est}$ und eine Wiedergabe der geschätzten Luftwiderstandskraft $F_{air}^{est}$ umfasst, welche auf das Fahrzeug wirken.

7.  Verfahren nach einem der Ansprüche 1-3, wobei die Ermittlung eine Ermittlung der geschätzten Masse $m_{est}$, eine Wiedergabe der geschätzten Rollwiderstandskraft $F_{roll}^{est}$ und einen geschätzten Fahrbahngradienten $\alpha^{est}$ umfasst, welche das Fahrzeug erfährt.

8.  Verfahren nach einem der Ansprüche 1-3, wobei die Ermittlung eine Ermittlung der geschätzten Masse $m_{est}$, eine Wiedergabe der geschätzten Rollwiderstandskraft $F_{roll}^{est}$, einen geschätzten Luftwiderstandskoeffizienten $C_{air}^{est}$ und einen geschätzten Fahrbahngradienten $\alpha^{est}$ umfasst, welche das Fahrzeug erfährt.

9.  Verfahren nach einem der Ansprüche 1-8, wobei das Fahrzeuglängsmodell auf Newtons zweitem Gesetz basiert.

10. Verfahren nach einem der Ansprüche 1-9, wobei ein Minimieren des Modellfehlers durch Nutzung eines rekursiven Verfahrens zur Identifizierung von geschätzten Werten vorgenommen wird, die kleinste Fehlerquadrate für das Fahrzeuglängsmodell darstellen, wobei die geschätzten Werte eingeführt werden, und wobei die bekannten Werten für eine andere Wiedergabe von Kräften eingeführt werden.

11. Verfahren nach einem der Ansprüche 1-10, wobei die Minimierung des Modellfehlers durch Nutzung eines Verfahrens aus der Gruppe von folgenden vorgenommen wird:

    - Least-Mean-Square Verfahren;
    - normiertes Least-Mean-Square Verfahren;
    - ein Verfahren, das Kalman-Filterung nutzt;
    - Rekursives Least-Square Verfahren;
    - Least-Square Verfahren mit Vergessensfaktor;
    - Rekursives Least-Square Verfahren mit Vergessensfaktor, und
    - Maximum-Likelihood Verfahren.

12. Computerprogramm, umfassend einen Programmcode, der dann, wenn das Programm in einem Computer ausgeführt wird, bewirkt, dass der Computer das Verfahren nach einem der Ansprüche 1-11 ausführt.

13. Computerprogrammprodukt, umfassend ein computerlesbares Medium und ein Computerprogramm nach Anspruch 12, wobei das Computerprogramm auf einem computerlesbaren Medium umfasst ist.

14. System zum Schätzen von Parametern, die eine Fahrwiderstandskraft $F_{drivingres}$ eines Fahrzeugs beeinflussen, umfassend

    - eine Modellvorrichtung, die dazu eingerichtet ist, ein Fahrzeuglängsmodell zu definieren, umfassend eine Wiedergaben von Kräften mit horizontalem Einfluss auf das Fahrzeug in einem gültigen Fahrzustand;
    - eine Ermittlungsvorrichtung, die dazu eingerichtet ist, eine geschätzten Masse $m^{est}$ für das Fahrzeug und eine Wiedergabe einer geschätzten Rollwiderstandskraft $F_{roll}^{est}$ zu ermitteln, welche auf das Fahrzeug wirkt;
    - eine Nutzungsvorrichtung, die dazu eingerichtet ist, die geschätzte Masse $m^{est}$ und die Wiedergabe der geschätzten Rollwiderstandskraft zu nutzen,

    **dadurch gekennzeichnet, dass** das Fahrzeuglängsmodell dazu eingerichtet ist, zusammen mit bekannten Werten für die Wiedergabe von Kräften genutzt zu werden, um den Modellfehler in dem Fahrzeuglängsmodell zu minimieren.

15. Kraftfahrzeug, umfassend ein System nach Anspruch 14.

**Revendications**

1. Procédé pour l'estimation de paramètres ayant un impact sur une force de résistance à l'avancement $F_{drivingres}$ pour un véhicule, comprenant

   - une définition, à titre d'une unité de modèle, d'un modèle de véhicule longitudinal, comprenant des représentations de forces ayant un impact horizontal sur ledit véhicule dans un mode de conduite valide ;
   - une détermination, avec un dispositif de détermination d'une masse estimée $m^{est}$ pour ledit véhicule, et d'une représentation d'une force de résistance au roulement estimée $F_{roll}^{est}$ ayant un impact sur ledit véhicule ;
   - une utilisation, avec un dispositif d'utilisation, de ladite masse estimée et de ladite représentation de ladite force de résistance au roulement estimée dans des systèmes de véhicule adaptés à la sélection automatique de rapports ou à la régulation de vitesse,

   **caractérisé en ce que** ledit modèle de véhicule longitudinal est utilisé conjointement avec des valeurs connues pour lesdites représentations de forces, afin de minimiser une erreur de modèle dans ledit modèle de véhicule longitudinal, dans lequel lesdites valeurs connues pour lesdites représentations desdites forces comprennent des valeurs calculées pour lesdites représentations desdites forces, qui ont été calculées sur base de paramètres mesurés et/ou d'hypothèses à propos des paramètres qui sont liés aux dites représentations desdites forces.

2. Procédé selon la revendication 1, dans lequel ledit mode de conduite valide constitue un mode de conduite pour lequel une force de rotation agissant sur ledit véhicule est négligeable, et pour lequel une force de traction $F_{trac}$ agissant sur ledit véhicule est connue.

3. Procédé selon l'une quelconque des revendications 1-2, dans lequel lesdites valeurs connues pour lesdites représentations des forces sont mesurées ou déterminées avec un modèle.

4. Procédé selon l'une quelconque des revendications 1-3, dans lequel ladite détermination de ladite force de résistance au roulement estimée $F_{roll}^{est}$ comprend une détermination d'un coefficient de résistance au roulement estimé $C_{roll}^{est}$.

5. Procédé selon l'une quelconque des revendications 1-4, dans lequel ledit modèle de véhicule longitudinal est décrit par l'équation : où

   - **a** est une accélération de véhicule ; -

   $$a + g \cdot \sin\alpha - \frac{1}{m^{est}} \cdot (F_{trac} - F_{air}) + C_r^{est} \cdot g = 0,$$

   - $m^{est}$ est une masse de véhicule totale, à estimer ;
   - **g** est la constante gravitationnelle ;
   - $C_r^{est}$ est un coefficient de résistance au roulement, à estimer ;
   - $F_{air}$ est une force de résistance à l'air ;
   - $\alpha$ est une déclivité actuelle de la route ;
   - $F_{trac}$ est une force de traction.

6. Procédé selon l'une quelconque des revendications 1-3, dans lequel ladite détermination comprend une détermination de ladite masse estimée $m^{est,}$ ladite représentation de ladite force de résistance au roulement $F_{roll}^{est}$ et une représentation d'une force de résistance à l'air $F_{roll}^{est}$ agissant sur ledit véhicule.

7. Procédé selon l'une quelconque des revendications 1-3, dans lequel ladite détermination comprend une détermination de ladite masse estimée, $m^{est}$, de ladite représentation de ladite force de résistance au roulement estimée $F_{roll}^{est}$ et d'une déclivité de route estimée $\alpha^{est}$ subie par ledit véhicule.

8. Procédé selon l'une quelconque des revendications 1-3, dans lequel ladite détermination comprend une détermination de ladite masse estimée $m^{est}$, ladite représentation de ladite force de résistance au roulement estimée $F_{roll}^{est}{}'$ un coefficient de résistance à l'air estimé $C_{roll}^{est}$ et une déclivité de route estimée $\alpha^{est}$ subie par ledit véhicule.

9. Procédé selon l'une quelconque des revendications 1-8, dans lequel ledit modèle de véhicule longitudinal est basé sur la deuxième loi de Newton.

10. Procédé selon l'une quelconque des revendications 1-9, dans lequel la minimisation de ladite erreur de modèle est réalisée via l'utilisation d'un procédé récursif d'identification des valeurs estimées, qui fournit une erreur de moindre carré pour ledit modèle de véhicule longitudinal, avec lesdites valeurs estimées étant introduites, et avec lesdites valeurs connues pour d'autres représentations des forces introduites.

11. Procédé selon l'une quelconque des revendications 1-10, dans lequel la minimisation de ladite erreur de modèle est réalisée via l'utilisation de l'un des procédés dans le groupe des :

- une méthode des moindres carrés ;
- une méthode des moindres carrés normalisée ;
- une méthode utilisant le filtrage de Kalman ;
- une méthode des moindres carrés récursive ;
- une méthode des moindres carrés avec facteur d'oubli;
- une méthode des moindres carrés récursive avec facteur d'oubli, et
- une méthode du maximum de vraisemblance.

12. Programme informatique comprenant un code de programme qui, lorsque ledit code de programme est exécuté dans un ordinateur, permet à ce dit ordinateur de mettre en oeuvre le procédé selon l'une quelconque des 30 revendications 1-11.

13. Produit de programme d'ordinateur comprenant un support lisible par ordinateur et un programme d'ordinateur selon la revendication 12, ledit programme d'ordinateur étant compris dans ledit support lisible par ordinateur.

14. Système pour l'estimation de paramètres ayant un impact sur une force de résistance de conduite $F_{drivingres}$ pour un véhicule, comprenant

- un dispositif de modèle agencé pour définir un modèle de véhicule longitudinal, comprenant des représentations de forces ayant un effet horizontal sur ledit véhicule dans des conditions de conduite valides ;
- un dispositif de détermination agencé pour déterminé une masse estimée $m^{est}$ pour ledit véhicule et une représentation d'une force de résistance au roulement $F_{roll}^{est}$ agissant sur ledit véhicule ;
- un dispositif d'utilisation agencé pour utiliser ladite masse estimée $m^{est}$ et ladite représentation de ladite force de résistance au roulement estimée, **caractérisé en ce que** ledit modèle de véhicule longitudinal est adapté pour être utilisé conjointement avec des valeurs connues pour lesdites représentations desdites forces, afin de minimiser une erreur de modèle dans ledit modèle de véhicule longitudinal.

15. Véhicule à moteur comprenant un système selon la revendication 14.

[101] Define longitudinal vehicle model

[102] Define estimates for mass and rolling resistance for vehicle

[103] Use estimated mass and estimated rolling resistance

Fig. 1

Fig. 2

FIG. 3a

FIG. 3b

FIG. 3c

FIG. 3d

Fig. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 10235969 A1
- DE 102011013022 B3
- US 2012016623 A1